# EUROPÄISCHE PATENTANMELDUNG

(11) **EP 2 784 029 A1**
(43) Veröffentlichungstag der Anmeldung: **01.10.2014**
(21) Anmeldenummer: 14162098.9
(22) Anmeldetag: 27.03.2014
(51) Int. Cl.: C02F 3/08, C02F 3/12, C02F 1/24, C02F 3/34, C02F 11/04, C02F 11/12, C02F 103/32

(54) **Verfahren und Anlage zur Gewinnung von Biomasse aus Fett und/oder Öl enthaltendem Abwasser**

(30) Priorität: 28.03.2013 DE 102013103240
(71) Anmelder: Firma aquadetox international GmbH, 88317 Altmannshofen (DE)
(72) Erfinder: Schaible, Jürgen, 87700 Memmingen (DE); Lorch, Roland, 88348 Bad Saulgau (DE)
(74) Vertreter: Baumann, Rüdiger Walter

(57) **Zusammenfassung**

Die Erfindung betrifft ein Verfahren und eine Anlage zur Gewinnung von in Biogas-anlagen einsetzbarer Biomasse aus Fett und/oder Öl enthaltendem Abwasser, wobei Fett und/oder Öl im Abwasser wenigstens teilweise emulgiert vorliegt/vorliegen, umfassend die Schritte:
(i) biochemisches Umsetzen im Abwasser enthaltenen emulgierten Fettes und/oder Öles in Biomasse,
(ii) Abscheiden der aus dem emulgierten Fett und/oder Öl gebildeten Biomasse, und
(iii) Zuführen der gebildeten Biomasse zu einer Biogasanlage.

Die Anlage umfasst wenigstens einen Belüftungsbehälter und wenigstens einen Wirbelbettreaktor.

## Beschreibung

Die Erfindung betrifft ein Verfahren und eine Vorrichtung zur Gewinnung von in Biogasanlagen einsetzbarer Biomasse aus Fett und/oder Öl enthaltendem Abwasser.

Derartige Abwässer entstehen beispielsweise in der lebensmittelherstellenden beziehungsweise lebensmittelverarbeitenden Industrie, wenn bei der Zubereitung, Haltbarmachung oder Weiterverarbeitung von Lebensmitteln Öle oder Fette eingesetzt werden. Dies ist beispielsweise in Friteusen oder dergleichen der Fall. Die dort eingesetzten Öle und Fette gelangen beispielsweise bei der Reinigung der verwendeten Gegenstände in die anfallenden Abwässer. Herkömmlicher Weise werden diese Fette und Öle vom Abwasser abgetrennt. Das fett- und ölhaltige Schmutz- und Spülwasser aus Küchen der Gastronomie, Hotelerie oder Gemeinschaftsverpflegung wird in der Regel über einen Fettabscheider entsorgt. Hier wird das Abwasser gereinigt, bevor es in die Kanalisation abfließt.

Die abgeschiedenen Fette und Öle werden in der Regel gesammelt und in regelmäßigen Abständen entsorgt, das heißt, beispielsweise deponiert oder einer Müllverbrennung zugeführt.

Nachteilig hierbei ist, dass die abgeschiedene Biomasse nicht für eine weitere Verwendung zur Verfügung steht. Die abgeschiedenen Öle beziehungsweise Fette eignen sich als Substrat oder Einsatzstoff für die Biogaserzeugung, da ein Abbau beziehungsweise eine Vergärung unter anaeroben Bedingungen möglich ist.

Ebenfalls nicht für die energetische Verwertung in einer Biogasanlage werden die in den Abwässern emulgierten Fett- und Ölanteile genutzt.

Aufgabe der vorliegenden Erfindung ist es daher, ein Verfahren zur Verfügung zu stellen, das die Nachteile des Standes der Technik überwindet und die energetische Nutzung fett- und/oder ölenthaltenden Abwassers wesentlich verbessert.

Diese Aufgabe wird gelöst durch das eingangs genannte Verfahren.

Das Verfahren zur Gewinnung von in Biogasanlagen einsetzbarer Biomasse aus Fett und/oder Öl enthaltendem Abwasser, wobei Fett und/oder Öl im Abwasser wenigstens teilweise als Emulsion, d.h. emulgiert, vorliegen, umfasst dabei mehrere Schritte.

Das im Abwasser enthaltene emulgiertes Fett und/oder Öl wird in einem Schritt des erfindungsgemäßen Verfahrens biochemisch umgesetzt, um in einem nachfolgenden Schritt zur Verfügung stehende Biomasse abzuscheiden. Das das Fett oder Öl enthaltene Abwasser stellt dabei selbst eine Emulsion dar. Die abgeschiedene Biomasse wird in einem weiteren Schritt des erfindungsgemäßen Verfahrens einer Biogasanlage zugeführt.

Das erfindungsgemäße Verfahren verbessert somit wesentlich die Wiederverwendung von in Abwasser enthaltenem Fett oder Öl, insbesondere von Fetten oder Ölen aus dem Lebensmittel be- oder verarbeitenden Gewerbe. Im Verfahren ergeben sich als Verfahrensprodukte zum einen in Biogasanlagen verwertbare Substanzen beziehungsweise Substrate, zum anderen gereinigtes Wasser, das unbedenklich in die Kanalisation abgegeben werden kann.

In einer Ausführungsform ist zudem eine Trocknung der gebildeten Biomasse vorgesehen. Dies erleichtert wesentlich die Lagerung bzw. den Transport und erlaubt eine Einstellung der für Biogasanlagen bzw. die dortige Vergärung optimalen Feuchtigkeit des Substrates.

Als günstig erweist sich, wenn eine Einstellung des Wassergehaltes der aus dem emulgierten Fett und/oder Öl gebildeten bzw. umgesetzten Biomasse vor dem Zuführen zu einer Biogasanlage vorgesehen ist. Es können so optimale Gärbedingungen geschaffen und die Effizienz der Biogasanlage wesentlich verbessert werden.

Ebenfalls möglich ist zuvor die Einstellung des Verhältnisses von Fett und/oder Öl zu Wasser im Ausgangssubstrat bzw. der O/W-Emulsion, um optimale Umsetzbedingungen für die Mikroorganismen und eine höchstmögliche Ausbeute an Biomasse zu realisieren.

Der Schritt des biochemischen Umsetzens wird dadurch wesentlich verbessert, dass, wie es in einer bevorzugten Weiterbildung des Verfahrens vorgesehen ist, nach dem ersten Verfahrensschritt ein Belüften des das emulgierte Fett und/oder Öl enthaltenden beziehungsweise bildenden Abwassers, insbesondere durch eine Einleitung von Luftsauerstoff vorgesehen ist. Durch diese Belüftung können aerobe Kleinstlebewesen, die in dem Abwasser vorhanden sind, unter ständiger Luftzufuhr die im Abwasser noch enthaltenen biologischen Verunreinigungen, und hierbei insbesondere die Öle und Fette, abbauen, so dass die Fett und Öllast des Abwassers, beziehungsweise der Emulsion aus Wasser und Öl beziehungsweise Fett weiter reduziert wird. Hier wird bereits Biomasse gebildet, die für die Verwertung in einer Biogasanlage zur Verfügung steht.

Eine als vorteilhaft angesehene Verfahrensvariante sieht vor, dass zunächst, d.h. vor dem biochemischen Umsetzen der emulgierten Fette und/oder Öle, ein Abscheiden und Abführen einer Fett und/oder Öl enthaltenden Phase des Abwassers, insbesondere in einem Fettabscheider, durchgeführt wird. In dem Fettabscheider verringert sich die Fließgeschwindigkeit des Fett und/oder Öl enthaltenden Abwassers. Das nicht emulgierte Fett und/oder Öl schwimmt aufgrund seiner geringeren Dichte auf und sammelt sich auf der Oberfläche und kann von dort entnommen werden. Die im Abwasser neben den sich an der Oberfläche sammelnden Fetten und/oder Ölen enthaltenen, emulgierten Fette und/oder Öle können den Fettabscheider, der in der Regel ausschließlich nach dem Schwerkraftprinzip arbeitet, ungehindert passieren.

Führt das aufzureinigende Abwasser neben den Fetten und Ölen weitere Feststoffe, wie beispielsweise protein- oder kohlehydrathaltige Essensreste oder sonstige Partikel mit, wird es als günstig angesehen, wenn vor oder nach dem Abscheiden und Abführen einer Fett und/oder Öl enthaltenden Phase des Abwassers in einem Fettabscheider ein Einleiten des Abwassers in einen ersten Absetzbehälter vorgesehen ist. In diesem setzen sich die Sink- und Feststoffe ab und können entnommen und ebenfalls einer Biogasanlage oder einer sonstigen Verwertung zugeführt werden. Der Fettabscheider kann selbstverständlich auch in diesen Absetzbehälter integriert sein, so dass ein gleichzeitiges Abscheiden der Fette und Öle, die sich an der Oberfläche des Abwassers ansammeln und ein Abtrennen der Feststoffe erfolgen kann. Eine dem Fettabscheider nachgelagerte Anordnung des Absetzbehälters ist ebenfalls möglich.

Als vorteilhaft wird angesehen, wenn die Belüftung des die Emulsion enthaltenden Abwassers in einem gesonderten Behälter durchgeführt wird. Es ist somit vorteilhaft, wenn nach dem Abscheiden der Öle beziehungsweise Fette im Fettabscheider ein Ableiten des das emulgierte Fett und/oder Öl enthaltenden Abwassers beziehungsweise des die Emulsion bildenden Abwassers in wenigstens einen Belüftungsbehälter erfolgt. In diesem Belüftungsbehälter kann durch die spezielle Anordnung von Belüftungsdüsen oder -elementen, beispielsweise Belüftungskerzentellern eine effektive Umwälzung des Abwassers und eine optimale Durchströmung mit Sauerstoff erreicht werden.

Eine als günstig angesehene Ausführungsform des Verfahrens sieht vor, dass die biochemische Umsetzung des emulgierten Fettes und/oder Öls in einem zur Durchführung eines Biofilmverfahrens geeigneten an sich bekannten Wirbelbettreaktor erfolgt. Hierzu wird insbesondere das belüftete Abwasser aus dem Belüftungsbehälter in den Wirbelbettreaktor überführt. In dem Wirbelbettreaktor erfolgt die Umsetzung bevorzugt auch in Gegenwart von Luftsauerstoff und an oder in insbesondere offenzelligen Trägerteilchen. Diese weisen an ihrer (inneren wie äußeren) Oberfläche einen aus aeroben Mikroorganismen gebildeten Biofilm auf. Bei diesem Trägermaterial handelt es sich bevorzugt um ein geschäumtes, daher offenporiges Material, das eine große innere Oberfläche aufweist. Auf dieser inneren Oberfläche wachsen Mikroorganismen auf, die die Wasserinhaltsstoffe, das heißt, vorliegend insbesondere auch Fette und Öle als Nährstoff verwenden und diese unter Einsatz von Luftsauerstoff umwandeln. Günstiger Weise sind die Trägerteilchen würfel- oder kugelartig ausgebildet und aufgrund ihrer Materialeigenschaft im Wirbelbettreaktor in der Schwebe gehalten. Die für den Einsatz in einer Biogasanlage zur Verfügung stehende Biomasse wird durch das Verfahren somit wesentlich erhöht und auch in dem Abwasser emulgiertes Fett beziehungsweise Öl für die energetische Nutzung in einer Biogasanlage verfügbar gemacht. Des Weiteren wird die Qualität des Abwassers erhöht. Das Verfahren ist zudem kostengünstig, da durch die Gewinnung von Brauchwasser der Einsatz von Frischwasser reduziert werden kann.

Nach dem Durchlaufen des Biofilmverfahrens enthält die Flüssigkeit beziehungsweise das Abwasser Biomasse. Als vorteilhaft wird angesehen, wenn diese die Biomasse enthaltende Flüssigkeit in einen zweiten Absetzbehälter abgeführt wird. In diesem zweiten Absetzbehälter können sich die in dem Abwasser enthaltenen Feststoffe beziehungsweise die für die Verwendung in der Biogasanlage vorgesehene Biomasse absetzen. Von dort wird die Biomasse dann der Biogasanlage zugeführt. Das geklärte Abwasser kann als Brauchwasser der Wiederverwendung, beispielsweise für Toilettenspülung, als Verdünnungsmittel für die noch umzusetzende Emulsion, für die Einstellung des Wassergehaltes des Substrats für die Biogasanlage, in der Biogasanlage selbst oder dergleichen, zugeführt werden. Durch das erfindungsgemäße Verfahren wird die Qualität des Brauchwassers wesentlich erhöht, die Öl- und Fettbelastung reduziert und somit ein effizientes und kostengünstiges System zur Verfügung gestellt, um fett- oder ölhaltige Schmutz- und Spülwässer aus Küchen der Gastronomie, Hotellerie und/oder Gemeinschaftsverpflegung aufzureinigen und die Produkte der Aufreinigung in einer Biogasanlage zusätzlich energetisch nutzbar zu machen.

In einer bevorzugten Ausführungsform des Verfahrens kommt es zunächst zu einer Abscheidung der Fett- oder Ölphasen des Schmutzoder Spülwassers mit darin enthaltenem Fett oder Öl und in einem weiteren Verfahrensschritt zur Gewinnung von Biomasse nach biochemischer Umsetzung einer fett- oder ölenthaltenden Emulsion. Nicht umgesetztes Fett und/oder Öl sowie gewonnene Biomasse eignen sich zur Verwendung in einer Biogasanlage. Erfindungsgemäß ist vorgesehen, dass eine getrennte Zuführung von Fett und/oder Öl sowie Biomasse zu der Biogasanlage erfolgt. Dies bringt den Vorteil, dass die Fette und/oder Öle beispielsweise als Beimischung zum Substrat der Biogasanlage Verwendung finden können. Über die getrennte Zuführung kann somit eine bessere Bestückung der Biogasanlage erfolgen und die Gasgewinnung durch geeignete Substratanreicherung so wesentlich effizienter gestaltet werden.

Eine alternative Ausführungsform des erfindungsgemäßen Verfahrens sieht vor, dass eine gemeinsame Zuführung der im Fettabscheider abgeschiedenen, Fette und/oder Öle enthaltenen Phase und der aus der biochemischen Umsetzung der Emulsion gewonnene Biomasse zu einer Biogasanlage durchgeführt wird. Die aus der Öl- oder Fettwasseraufreinigung gewonnenen Stoffe werden somit direkt und in Mischung als Substrat für die Biogasanlage zur Verfügung gestellt.

Die Aufreinigungsleistung des erfindungsgemäßen Verfahrens ist einstellbar, beispielsweise über die Geschwindigkeit des Durchflusses der Abwässer durch den Fettabscheider. Als vorteilhaft wird angesehen, wenn im Fettabscheider zwischen 5 und 15 %, insbesondere zwischen 7 und 12 %, bevorzugt zwischen 8 und 10 % der im Abwasser enthaltenen Fette und Öle abgetrennt werden. Durch die hier erreichbare Einstellbarkeit kann auch die Effizienz der nachgeordneten Aufreinigungsstufen beeinflusst werden. Die Fettund/oder Öllast der Emulsion wird hierbei eingestellt, sodass optimale Bedingungen für das Biofilmverfahren erreicht werden können.

Eine vorteilhafte Weiterbildung des erfindungsgemäßen Verfahrens sieht vor, dass vor der eigentlichen Einleitung der Abwässer in den Fettabscheider das Fett und/oder Öl enthaltene Abwasser zur Abtrennung von den vom Abwasser mitgeführten Feststoffen in einen ersten Absetzbehälter eingeleitet wird. Hierbei sieht eine Variante des Verfahrensschrittes vor, dass der Fettabscheider insbesondere in den ersten Absetzbehälter integriert oder dem ersten Absetzbehälter nachgeordnet vorgesehen ist. Die Abtrennung von Sinkund Feststoffen, wie beispielsweise Essensresten, wird somit gleichzeitig mit der Sammlung der Öle beziehungsweise Fette an der Oberfläche des Abwassers durchgeführt. Ebenfalls möglich und denkbar ist es jedoch, diese Schritte nacheinander durchzuführen.

Als "Emulsion" im Zusammenhang mit der Erfindung (Verfahren und Vorrichtung) ist ein fein verteiltes Gemisch wenigstens zweier, normalerweise nicht mischbarer Flüssigkeiten zu verstehen. Eine Flüssigkeit, vorliegend aus Ölen und/oder gelösten Fetten bestehend, bildet kleine Tröpfchen, die fein verteilt sind in der anderen Flüssigkeit, vorliegend Wasser bzw. überwiegend aus Wasser bestehend. Im Zusammenhang mit der Erfindung liegt in der Regel eine Öl-in-Wasser-Emulsion (O/W-Emulsion) vor. Dies schließt jedoch nicht aus, dass das Verfahren mit einer Wasser-in-Öl-Emulsion (W/O-Emulsion) anwendbar ist. Beides ist von der Erfindung umfasst.

Eine Phase der Emulsion wird gebildet durch emulgiertes Öl und/oder Fett, während die zweite Phase gebildet wird aus Wasser bzw. einer im wesentlichen aus Wasser gebildeten Flüssigkeit. Die Anwesenheit von beispielsweise Tensiden ist nicht ausgeschlossen. Diese können einen Anteil der Phase bilden.

Die Erfindung erfasst gleichermaßen eine Anlage zur Gewinnung von in Biogasanlagen einsetzbarer Biomasse aus Fett und/oder Öl enthaltendem Abwasser. Die Anlage umfasst dabei wenigstens ein Belüftungsbecken für das das Fett und/oder Öl enthaltende Abwasser und wenigstens einen zur biochemischen Umsetzung des emulgierten Fettes oder Öls in einem Biofilmverfahren geeigneten Wirbelbettreaktor. Diese Grundelemente der Anlage erlauben eine Vorumsetzung der im Abwasser enthaltenen bevorzugt emulgierten Öle oder Fette beziehungsweise sonstiger durch aerobe Bakterien und Mikroorganismen abbaubarer Stoffe im Belüftungsbecken. Die entsprechend vorbehandelten Abwässer werden zur biochemischen Umsetzung weitergegeben werden. In dieser wird das emulgierte Fett und/oder Öl in in der Biogasanlage verwertbare Biomasse umgesetzt und dem Abwasser entzogen. Die Anlage ermöglicht die Gewinnung von im wesentlichen fett- oder ölfreiem Brauchwasser einerseits und in Biogasanlagen verwendbaren Substraten andererseits.

Die Anlage umfasst in einer Ausführungsform bevorzugt einen Fettabscheider zum Abscheiden eine Fett und/oder Öl enthaltenden Festphase. Dieser führt zunächst eine Abscheidung von sich an der Oberfläche der Abwässer bildenden fett- oder ölhaltigen Phasen durch. Die abgezogenen Fette/Öle können direkt der Biogasanlage zugeführt oder für eine spätere Beimischung gelagert werden.

Dem Fettabscheider ist bevorzugt ein erster Absetzbehälter für im Abwasser mitgeführte Feststoffe zugeordnet. Ein derartiger Absetzbehälter kann selbstverständlich auch dem Fettabscheider nachgeordnet vorgesehen werden.

Die Anlage ist günstigerweise transportabel oder stationär ausgebildet. Eine transportable Anlage lässt sich bedarfsweise oder als Übergangslösung in Betrieben mit hohem Anfall an mit Fett oder Öl belastetem Abwasser einsetzen. Eine stationäre Anlage empfiehlt sich dann, wenn regelmäßig große Mengen an mit Fett oder Öl belastetem Abwasser anfallen und eine Biogasanlage zur Verwertung des abgeschiedenen Substrats zur Verfügung steht. Die Behälter sind dann bevorzugt als Becken oder Silos ausgeführt.

Dem in der Anlage vorgesehenen Wirbelbettreaktor ist bevorzugt ein zweiter Absetzbehälter nachgeordnet, in dem sich die im Biofilmverfahren erzeugte beziehungsweise aus dem Abwasser abgeschiedene Biomasse absetzt. Aus dem Behälter kann die Biomasse entnommen und der Biogasanlage zugeführt werden.

Die Anlage gemäß der Erfindung ist bevorzugt an eine Biogasanlage anschließbar. Die im Fettabscheider abgeschiedene Fett oder Öl enthaltende Festphase und die im Biofilmverfahren gebildete Biomasse sind dabei bevorzugt getrennt oder gemeinsam der Biogasanlage zuführbar. Die getrennte oder gemeinsame Zuführung ist abhängig von der Betriebsart der Biogasanlage. Die aus der erfindungsgemäßen Anlage gewonnenen Substrate können zur Effizienzsteigerung der Biogasanlage beitragen, da energetisch hochwertige Substrate zur Verfügung gestellt werden. Diese können jedoch auch den sonstigen, in der Biogasanlage verwendeten Stubstraten in einem gewissen Anteil beigemischt werden, um die Vergärungsprozesse der Biogasanlage und damit die Gaszusammensetzung und Ausbeute zu steuern und gegebenenfalls zu verbessern.

Als vorteilhaft wird angesehen, wenn eine Anbindung des Fettabscheiders und/oder des zweiten Absetzbehälters an eine Biogasanlage oder ein der Biogasanlage zugeordnetes Biomasselager erfolgt. Die erzeugten Substrate können somit direkt der Biogasanlage zugeführt oder aber für eine spätere Verwendung oder Beimischung gelagert werden.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrensübertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

In der Zeichnung ist die Erfindung insbesondere in einem Ausführungsbeispiel schematisch dargestellt. Es zeigt:

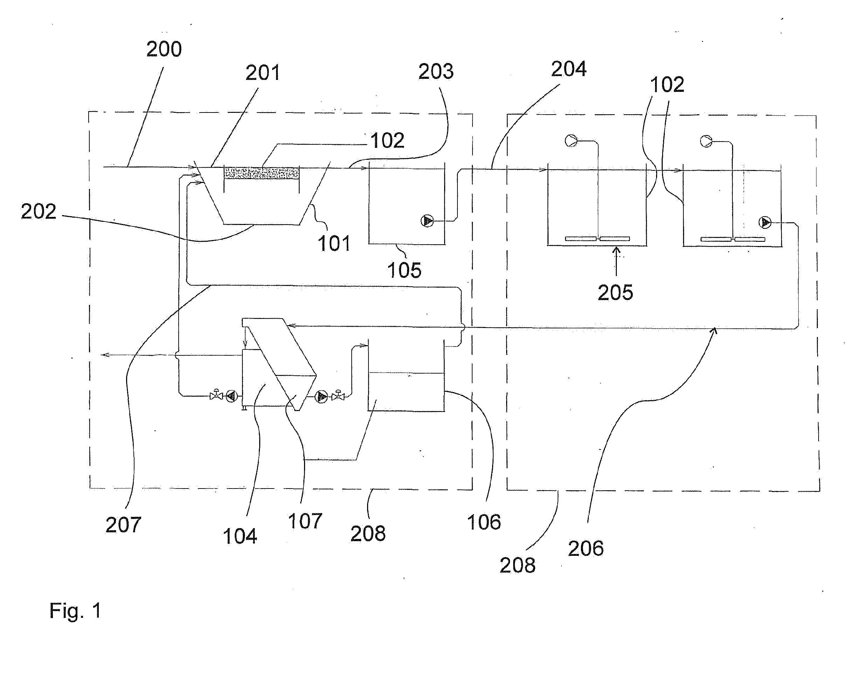

- Fig. 1: eine schematische Übersicht über eine Anlage für die Durchführung eines Verfahrens zur Gewinnung von in Biogasanlagen einsetzbarer Biomasse.

Fig. 1 zeigt schematisch eine Anlage, die sich für die Durchführung eines Verfahrens zur Gewinnung von in Biogasanlagen einsetzbarer Biomasse aus Fett und/oder Öl enthaltendem Abwasser eignet. Die Öl und/oder Fett enthaltenden Abwässer werden über eine erste Rohrleitung 200 beispielsweise aus einem Lebensmittel be- oder verarbeitenden Betrieb in einen Fettabscheider 101 eingeleitet. Dort sammelt sich an der Oberfläche 201 die Fett oder Öl enthaltenden Festphase 102. Diese kann aus dem Fettabscheider 101 entnommen, beispielsweise abgesaugt oder abgeschwemmt werden, um direkt einer Biogasanlage zugeführt zu werden. Im Abwasser ebenfalls mitgeführte Sink- oder Feststoffe sammeln sich am Boden 202 des Fettabscheiders 101 und können von dort entnommen und ebenfalls der Biogasanlage zugeführt werden. Bei den Sink- oder Feststoffen handelt es sich im Falle der vorliegenden, für die Verwendung im lebensmittelverarbeitenden Gewerbe vorgesehene Anlage um bspw. protein- oder kohlenhydrathaltige Essensreste oder Produktionsabfälle aus der Nahrungsmittelherstellung.

Über eine weitere Rohrleitung 203 wird das von der nicht emulgierten Fett oder Ölphase befreite Abwasser in einen ersten Absetzbehälter 105 überführt. Hier setzen sich weitere Sink- oder Feststoffe ab. Das Abwasser wird dann über eine weitere Rohrleitung 204 in die Belüftungsbehälter 102 überführt. Durch die im Bodenbereich 205 der Belüftungsbehälter 102 vorgesehenen Düsen wird Sauerstoff in das Abwasser eingeleitet. Hierdurch werden aerobe Bakterien oder Mikroorganismen wie beispielsweise Hefen aktiviert beziehungsweise stimuliert, wodurch eine Umsetzung der im Abwasser mitgeführten Stoffe, beispielsweise von emulgiertem Fett oder Öl erfolgt. Die Abwässer werden so auch für die biochemische Umsetzung in einem Wirbelbettreaktor 104 vorbereitet. Aus den Belüftungsbehältern 102 wird über eine weitere Rohrleitung 206 das Abwasser dem Wirbelbettreaktor 104 zugeführt. Dort erfolgt in einem Biofilmverfahren eine weitere Umsetzung der im Abwasser enthaltenen Biomasse, insbesondere der mitgeführten, im Abwasser emulgierten Fette und/oder Öle. Die aus geeigneten Mikroorganismen gebildeten Biofilme sind auf Trägerteilchen (nicht dargestellt) ausgebildet. Diese Trägerteilchen bestehen aus einem offenzelligen Material, das eine große Oberfläche für den Aufwuchs aerober Mikroorganismen zur Verfügung stellt. Durch den Kontakt mit den im Abwasser enthaltenen Ölen und Fetten wird ein Umbau der Öle oder Fette durch die Mikroorganismen angeregt. Unter Bildung von Biomasse 107 sowie Kohlendioxid wird das im Abwasser enthaltene, dort emulgierte Öl oder Fett zu in einer Biogasanlage verwertbarer Biomasse abgebaut. Diese sammelt sich als Biomasse 107 im tiefer gelegenen Teil des Wirbelbettreaktors 104 und kann von dort entnommen werden. Nach der Entnahme kann die noch immer flüssige Biomasselösung entweder direkt einem Biogasreaktor zugeführt werden. Alternativ besteht die Möglichkeit, einen weiteren, zweiten Absetzbehälter 106 vorzusehen, dem sich die Biomasse 107 als Schlamm absetzt. Der Überstand, das heißt, fett und ölbefreites Abwasser kann über eine weitere Rohrleitung 207 dem Fettabscheider 101 zugeführt werden, um die dort eingebrachten Abwässer zu verdünnen beziehungsweise um nicht im Wirbelbettreaktor 104 erfasste beziehungsweise umgesetzte Fette oder Öle nochmals aus dem Abwasser abzuscheiden.

Alternativ besteht die Möglichkeit, dass die Biomasse 107 direkt aus dem Wirbelbettreaktor 104 entnommen und das ebenfalls im Wirbelbettreaktor 104 erzeugte Brauchwasser wieder in den Kreislauf eingespeist wird. Die erzeugte Biomasse 107 kann zusammen mit dem Fett oder Öl aus dem Fettabscheider 101 der Biogasanlage zugeführt werden. Alternativ kann eine getrennte Zuführung vorgesehen werden.

Statt einer Einleitung des aufgereinigten Wassers in den Kreislauf kann auch die Einleitung in die Kanalisation oder die Zuführung zu einem Brauchwasserkreislauf durchgeführt werden und das aufgereinigte, qualitativ hochwertige Abwasser somit der Wiederverwendung zugeführt werden.

Mit der in Fig. 1 gezeigten Anlage kann somit wertvolle Biomasse 107 zur Verwendung in einer Biogasanlage zur Verfügung gestellt werden, die ausschließlich aus Fett und/oder Öl enthaltenden Abwassern, insbesondere aus der Lebensmittelindustrie gewonnen wird.

Die Teile der Anlage können auch transportabel ausgebildet werden, so dass ein flexibler Einsatz der Anlage möglich wird. Hierzu werden die einzelnen Teile in Containern 208, die in der Fig. 1 schematisch dargestellt sind, untergebracht. Diese Container 208 können problemlos an die entsprechenden Einsatzpunkte der Anlage verbracht werden.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mitanderen Merkmalen besonders günstige Ergebnisse erreichen.

## Patentansprüche

1. Verfahren zur Gewinnung von in Biogasanlagen einsetzbarer Biomasse aus Fett und/oder Öl enthaltendem Abwasser, wobei Fett und/oder Öl im Abwasser wenigstens teilweise emulgiert vorliegt/vorliegen, umfassend die Schritte:
(i) biochemisches Umsetzen im Abwasser enthaltenen emulgierten Fettes und/oder Öles in Biomasse,
(ii) Abscheiden der aus dem emulgierten Fett und/oder Öl gebildeten Biomasse, und
(iii) Zuführen der gebildeten Biomasse zu einer Biogasanlage.

2. Verfahren nach Anspruch 1, **dadurch gekennzeichnet, dass** vor Schritt (i) der Schritt
(o) Abscheiden und Abführen einer nicht-emulgiertes Fett und/oder Öl enthaltenden Phase des Abwassers insbesondere in einem Fettabscheider, vorgesehen ist.

3. Verfahren nach Anspruch 1, **dadurch gekennzeichnet, dass** nach Schritt (ii) ein Trocknen der Biomasse vorgesehen ist und/oder ein Einstellen des Wassergehaltes der aus dem emulgierten Fett und/oder Öl gebildeten Biomasse vor dem Zuführen zu einer Biogasanlage vorgesehen ist.

4. Verfahren nach einem der vorhergehenden Ansprüche, **dadurch gekennzeichnet, dass** nach Schritt (o) ein Belüften des das emulgierte Fett und/oder Öl enthaltenden Abwassers, insbesondere durch Einleitung von Luftsauerstoff, vorgesehen ist und/oder dass vor oder nach Schritt (o) ein Einleiten des Abwassers in eine ersten Absetzbehälter vorgesehen ist und/oder dass nach Schritt (o) ein Ableiten des das emulgierte Fett und/oder Öl enthaltenden Abwassers in wenigstens einen Belüftungsbehälter vorgesehen ist.

5. Verfahren nach Anspruch 2 bis 4, **dadurch gekennzeichnet, dass** das biochemische Umsetzen des emulgierten Fettes und/oder Öles mittels aerober Mikroorganismen durchgeführt wird und/oder das biochemische Umsetzen des emulgierten Fettes und/oder Öls in einem zur Durchführung eines Biofilmverfahren geeigneten Wirbelbettreaktor, insbesondere nach Überführung des belüfteten Abwassers in den Wirbelbettreaktor, erfolgt.

6. Verfahren nach einem der vorhergehenden Ansprüche, **dadurch gekennzeichnet, dass** die Umsetzung in einen Wirbelbettreaktor in Gegenwart von Luftsauerstoff und insbesondere offenzelligen, an ihrer Oberfläche einen aus aeroben Mikroorganismen gebildeten Biofilm aufweisenden Trägerteilchen erfolgt.

7. Verfahren nach einem der vorhergehenden Ansprüche, **dadurch gekennzeichnet, dass** eine Abführung einer die Biomasse enthaltenden Flüssigkeit in einen zweiten Absetzbehälter vorgesehen ist und/oder dass eine getrennte Zuführung der im Fettabscheider abgeschiedenen, Fett und/oder Öl enthaltenden Phase und der aus biochemischer Umsetzung des emulgierten Fettes oder Öles gewonnenen Biomasse zu einer Biogasanlage vorgesehen ist.

8. Verfahren nach einem der vorhergehenden Ansprüche, **dadurch gekennzeichnet, dass** eine gemeinsame Zuführung der im Fettabscheider abgeschiedenen, Fett und/oder Öl enthaltenden Phase und der aus biochemischer Umsetzung der Emulsion gewonnenen Biomasse zu einer Biogasanlage vorgesehen ist.

9. Verfahren nach einem der vorhergehenden Ansprüche, **dadurch gekennzeichnet, dass** im Fettabscheider zwischen 5% und 15%, insbesondere zwischen 7% und 12%, bevorzugt zwischen 8% und 10% der im Abwasser enthaltenen Fette und Öle abgetrennt werden.

10. Verfahren nach einem der vorhergehenden Ansprüche, **dadurch gekennzeichnet, dass** das Fett und/oder Öl enthaltende Abwasser zur Abtrennung von im Abwasser mitgeführten Feststoffen in einen ersten Absetzbehälter eingeleitet wird, wobei ein Fettabscheider insbesondere in den ersten Absetzbehälter integriert oder dem ersten Absetzbehälter nachgeordnet oder vorgelagert vorgesehen ist.

11. Anlage zur Gewinnung von in Biogasanlagen einsetzbarer Biomasse aus Fett und/oder Öl enthaltendem Abwasser, umfassend:
- wenigstens einen Belüftungsbehälter (102) für emulgiertes Fett und/oder Öl enthaltendes Abwasser,
- wenigstens einen zur biochemischen Umsetzung des emulgierten Fettes und/oder Öles in einem Biofilmverfahren geeigneten Wirbelbettreaktor (104).

12. Anlage nach Anspruch 11, ferner umfassend
- einen Fettabscheider (101) zum Abscheiden einer Fett und/oder Öl enthaltenden Festphase (102).

13. Anlage nach Anspruch 12, **dadurch gekennzeichnet, dass** dem Fettabscheider (101) ein erster Absetzbehälter (105) für im Abwasser mitgeführte Feststoffe zugeordnet oder nachgeordnet vorgesehen ist und/oder dass die Anlage (100) transportabel oder stationär ausgebildet ist.

14. Anlage nach einem der Ansprüche 11 bis 13, **dadurch gekennzeichnet, dass** dem Wirbelbettreaktor (104) nachgeordnet ein zweiter Absetzbehälter (106) vorgesehen ist.

15. Anlage nach einem der Ansprüche 11 bis 14, **dadurch gekennzeichnet, dass** die Anlage an eine Biogasanlage anschließbar ist, insbesondere wobei die im Fettabscheider (101) abgeschiedene, Fett oder Öl enthaltende Festphase (102) und die im Biofilmverfahren gebildete Biomasse (107) getrennt oder gemeinsam der Biogasanlage zuführbar ist/sind und/oder eine Anbindung des Fettabscheiders (101) und des zweiten Absetzbehälters (106) an eine Biogasanlage und/oder ein der Biogasanlage zugeordnetes Biomasselager vorgesehen ist.
